# EUROPÄISCHE PATENTANMELDUNG

(11) **EP 3 321 538 A1**
(43) Veröffentlichungstag der Anmeldung: **16.05.2018**
(21) Anmeldenummer: 17195354.0
(22) Anmeldetag: 09.10.2017
(51) Int. Cl.: F16F 15/134

(54) **TORSIONSSCHWINGUNGSDÄMPFER**

(30) Priorität: 14.11.2016 DE 102016222291
(71) Anmelder: ZF Friedrichshafen AG, 88046 Friedrichshafen (DE)
(72) Erfinder: Heidingsfeld, Dietmar, 52078 Aachen (DE); Kranz, Andreas, 52223 Stolberg (DE); Ritterbecks, Dietmar, 52525 Waldfeucht (DE); Peters, Stefan, 52078 Aachen (DE)

(57) **Zusammenfassung**

Torsionsschwingungsdämpfer mit einer um eine Drehachse A drehbaren Antriebsseite mit einem antriebsseitigen Übertragungselement und einem gleichachsig hierzu drehauslenkbaren abtriebsseitigen Übertragungselement auf einer Abtriebsseite, das mit dem antriebsseitigen Übertragungselement über eine mit Energiespeichern versehene Dämpfungseinrichtung verbunden ist, bei der sich die Energiespeicher an Gleitelementen abstützen, die in einem der Übertragungselemente in Umfangsrichtung bewegbar angeordnet sind, und wobei die Gleitelemente zumindest eine zu der Antriebsseite oder der Abtriebsseite gerichteten Seitenfläche aufweisen mit einem zu einem Abstützbereich für die Energiespeicher gerichteten Seitenflächenende, wobei zumindest ein Seitenflächenende eine Konturierung aufweist, die zu einer korrespondierenden Konturierung des benachbarten Seitenflächenendes des benachbarte Gleitelements gerichtet ist, wobei die Gleitelemente mit beidseitigen Abstützbereichen) für die Energiespeicher jeweils unterschiedliche Konturierungen der beiden Seitenflächenenden aufweisen.

## Beschreibung

Die Erfindung betrifft einen Torsionsschwingungsdämpfer mit einer um eine Drehachse A drehbaren Antriebsseite mit einem antriebsseitigen Übertragungselement und einem gleichachsig hierzu drehauslenkbaren abtriebsseitigen Übertragungselement auf einer Abtriebsseite, das mit dem antriebsseitigen Übertragungselement über eine mit Energiespeichern versehene Dämpfungseinrichtung verbunden ist, bei der sich die Energiespeicher an Gleitelementen abstützen, die in einem der Übertragungselemente in Umfangsrichtung bewegbar angeordnet sind, und wobei die Gleitelemente zumindest eine zu der Antriebsseite oder der Abtriebsseite gerichteten Seitenfläche aufweisen mit einem zu einem Abstützbereich für die Energiespeicher gerichteten Seitenflächenende wobei zumindest ein Seitenflächenende eine Konturierung aufweist, die zu einer korrespondierenden Konturierung des benachbarten Seitenflächenendes des benachbarte Gleitelements gerichtet ist.

Ein derartiger Torsionsschwingungsdämpfer ist aus der DE 10 2011 075 114 A1 bekannt. Dieser Torsionsschwingungsdämpfer verfügt über Gleitelemente mit Seitenflächen sowie zu Abstützbereichen der Energiespeicher gerichtete Seitenflächenenden, wobei die Seitenflächenenden von benachbarten Gleitelementen bei einer maximalen Annäherung sich vollständig zur gegenseitigen Anlage bringen. Dabei sind die mittleren Gleitelemente mit zwei Abstützbereichen für die Energiespeicher ausgeführt. Dabei sind die Längen der Abstützbereiche jedes mittleren Gleitelementes unterschiedlich lang. Dabei sind die mittleren Gleitelemente so ausgeführt, dass diese in einer umfangsmäßig verlaufenden Reihenfolge gestaffelt angeordnet werden können. Dabei trifft ein Gleitelement mit seinem langen Abstützbereich auf ein Gleitelement mit einem kurzen Abstützbereich. Der Vorteil liegt hier das die mittleren Gleitelemente konstruktiv gleich ausgeführt werden können und folglich in Reihe beliebig oft verbaut werden können. Um jedoch bei der Montage anhand der Gleitschuhe erkennbar zu machen ob die Federaufnahme eines jeden Gleitschuhes eine unterschiedliche Länge hat, ist das vorhandene Gleitschuhdesign aus der bekannten DE 10 2011 075 114 A1 nicht geeignet.

Der Erfindung liegt die Aufgabe zugrunde, Gleitelemente an einer Dämpfungseinrichtung eines Torsionsschwingungsdämpfers so auszubilden, dass bei der Montage eine funktionsrelevante Einbaureihenfolge erkannt werden kann, die im Zusammenhang mit der Länge der jeweiligen Abstützbereiche für die Energiespeicher steht.

Gelöst wird diese Aufgabe durch einen Torsionsschwingungsdämpfer mit einer um eine Drehachse A drehbaren Antriebsseiten mit einem antriebsseitigen Übertragungselement und einem gleichachsig hierzu drehauslenkbaren abtriebsseitigen Übertragungselement auf eine Abtriebsseite, das mit dem antriebsseitigen Übertragungselement über eine mit Energiespeichern versehene Dämpfungseinrichtung verbunden ist, bei der sich die Energiespeicher an Gleitelementen abstützen, die in einem Übertragungselement in Umfangsrichtung bewegbar angeordnet sind und wobei die Gleitelemente zumindest eine zu der Antriebsseite oder zu der Abtriebsseite gerichteten Seitenfläche aufweisen mit einen zu einem Abstützbereich für die Energiespeicher gerichteten Seitenflächenende, wobei zumindest ein Seitenflächenende eine Konturierung aufweist die zu einer korrespondierenden Konturierung des benachbarten Seitenflächenendes des benachbarten Gleitelements gerichtet ist, wobei die Gleitelemente mit beidseitigem Abstützbereichen für die Energiespeicher jeweils eine unterschiedliche Konturierung der beiden Seitenflächenenden aufweisen. Dabei ist die Konturierung der Länge des Abstützbereiches des Gleitelementes zugeordnet. Die Konturierung des Seitenflächenendes das beispielsweise zu einem kurzen Abstützbereich gerichtet ist, weist eine andere Form auf als eine Konturierung einer Seitenfläche eines langen Abstützbereiches. Dies bedeutet, dass bei der Montage ersichtlich ist, welche Gleitelemente in Umfangsrichtung verlaufenden Reihenfolge eingesetzt werden müssen. Eine Montage der Gleitelemente in einer falschen Reihenfolge kann somit verhindert werden. Von daher ist jedem unterschiedlich langen Abstützbereich eine entsprechende Konturierung der Seitenflächenenden zugeordnet.

Weiter können die benachbarten Seitenflächenenden der Gleitelemente bei einer maximalen Annäherung vollständig oder nahezu vollständig zur gegenseitigen Anlage gebracht werden. Bei einer vollständigen gegenseitigen Anlage der Seitenflächenenden entsteht eine komplett durchgängige Seitenfläche ohne eine Öffnung. Es können jedoch auch die benachbarten Konturierungen der Seitenflächenenden so ausgeführt sein, dass nur ein Teil der Fläche der Seitenflächenenden zur gegenseitigen Anlage kommt. Dies kann fertigungstechnische Gründe der Gleitelemente haben.

In einer weiteren vorteilhaften Ausführungsform kann es vorgesehen sein, dass die benachbarten Gleitelemente an einer umfangsmäßigen Gleitfläche zueinander gerichtete Umfangsfortsetzte und/oder Eindringräume aufweisen. Durch die Umfangsfortsetzte und die korrespondierenden Eindringräume kann eine vorteilhafte radiale Lagerung der Energiespeicher, die vorzugsweise hier als Schraubenfedern ausgebildet sind, erreicht werden. Dabei bilden die Umfangsfortsetzte eine zusätzliche radiale Lagerung bzw. Führung der Energiespeicher nach radial außen. Bei einer relativen Verdrehung der Antriebsseite zu der Abtriebsseite erfolgt eine Kombinierung der Energiespeicher und folglich ein Annähern der benachbarten Gleitelemente. Dabei fahren die jeweiligen Umfangsfortsetze der Gleitelemente in die korrespondierenden Eindringräume der benachbarten Gleitelemente ein. Weiter kann durch diese konstruktive Ausführungsform eine vorteilhafte Gleitlagerung, die umfangsmäßig verläuft, erzielt werden. Dabei ist die Länge der Umfangsfortsetze und der korrespondierenden Eindringräume der benachbarten Gleitelemente so abgestimmt, dass bei einer maximalen Annäherung der benachbarten Gleitelemente also ein maximaler Verdrehwinkel der Antriebsseite zu der Abtriebsseite die Gleitelemente zueinander auf Block gehen. Dabei ist der Abstützbereich für die Energiespeicher in der Länge so ausgeführt dass bei der maximalen Annäherung der benachbarten Gleitelemente die Energiespeicher in Form von Schraubenfedern nicht auf Block gehen. Dies ist besonders vorteilhaft für die Lebensdauer der Schraubenfedern.

Weiter können die benachbarten Gleitelemente einen Energiespeicheraufnahmeraum bilden wobei der Energiespeicheraufnahmeraum bei einer maximalen Annäherung der benachbarten Gleitelemente eine Länge aufweist, die größer ist als eine Blocklänge der darin aufgenommenen Schraubenfeder. Dies bedeutet, dass bei einem maximalen Verdrehwinkel der Antriebsseite zu der Abtriebsseite die Gleitelemente auf Block gehen, also vollständig zur gegenseitigen Anlage kommen, wohingegen die Energiespeicher vorteilhaft in Form von Schraubenfedern nicht auf ihre Blocklänge komprimiert werden. Dies ist vorteilhaft für die Lebensdauer der Schraubenfedern.

Weiter kann es vorteilhaft sein, wenn die Gleitelemente mit zwei Abstützbereichen für Energiespeicher jeweils unterschiedliche Längen für die Abstützelemente vorsehen. Hierbei steht die Kontur der Seitenflächenenden zu der Länge der Abstützbereiche in Relation. Dies bedeutet, dass jeder Länge von Abstützbereich eine entsprechende Kontur der Seitenflächenenden zugeordnet ist. Die Erfindung wird nachfolgend anhand einer Zeichnung näher erläutert.

Die Erfindung wird nachfolgend anhand einer Zeichnung näher erläutert.

Es zeigen die
- Fig. 1: einen Radialschnitt durch einen Torsionsschwingungsdämpfer mit einer Dämpfungseinrichtung die über erfindungsgemäße Gleitelemente für Energiespeicher verfügt;
- Fig. 2: eine Draufsicht auf den Torsionsschwingungsdämpfer, wie in Figur 1 gezeigt mit einem Ausbruch im Bereich der Energiespeichereinrichtung;
- Fig. 3: wie Figur 2, jedoch mit einem mittigen Querschnitt im Bereich der Energiespeichereinrichtung
- Fig. 4: eine Herauszeichnung der in Figur 1,2 und 3 gezeigten Gleitelemente in Relativpositionierung zueinander die sich bei zumindest teilentspannten Energiespeichern ergibt;
- Fig. 5: wie Figur 4, aber mit einer Relativpositionierung der Gleitelemente kurz vor dem Erreichen einer Anschlagposition.
- Fig. 6: wie in Figur 4 aber bei Endanschlagposition.
- Fig. 7: ein einzelnes mittleres Gleitelement.

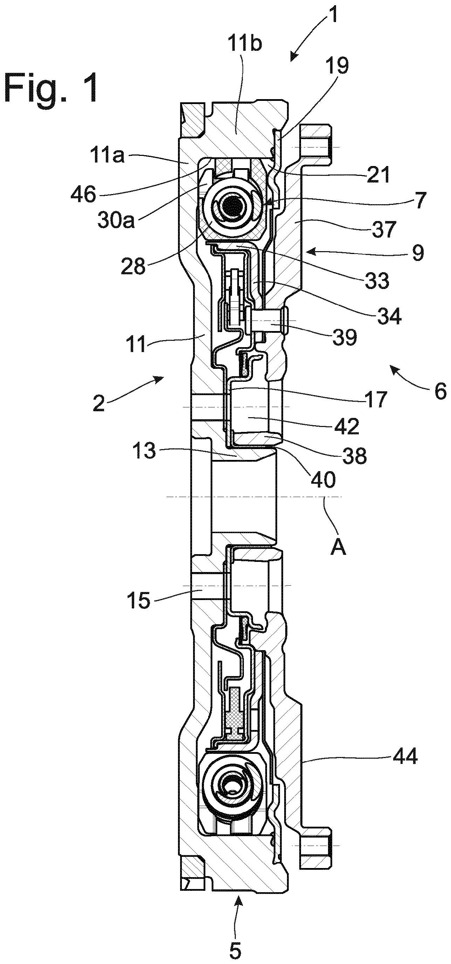

Die Figur 1 zeigt einen Torsionsschwingungsdämpfer 1, der um eine Achse 3 drehbar angeordnet ist. Der Torsionsschwingungsdämpfer 1 verfügt über eine Antriebsseite 2 mit einem antriebsseitiges Übertragungselement 5, das mittels einer Dämpfungseinrichtung 7 mit einem abtriebsseitigen Übertragungselement 9 auf einer Abtriebsseite 6 in Wirkverbindung steht.

Das antriebsseitige Übertragungselement 5 verfügt über einen Primärflansch 11, der mit einer Primärnabe 13 verbunden ist. Die Primärnabe 13 ist dabei integral mit dem Primärflansch 11 ausgeführt. Der Primärflansch 11 und die Primärnabe 13 können mittels ebenfalls nicht gezeigter Befestigungselemente, wie Schrauben, mit einer Kurbelwelle einer Brennkraftmaschine fest verbunden sein, so dass das antriebsseitige Übertragungselement 5 mit der Kurbelwelle drehfest ist. Die vorgenannten Schrauben durchdringen die in Fig. 1 gezeigten Durchgänge 15, und vermögen sich mit ihren Schraubköpfen an Anlaufscheiben 17 abzustützen, die von höherer Festigkeit als Primärflansch 11 und Primärnabe 13 sein können.

Der Primärflansch 11 erstreckt sich, ausgehend von der Primärnabe 13, mit einem ersten Radialabschnitt 11 a zunächst im Wesentlichen in Radialrichtung, um im radialen Außenbereich mit einem Axialabschnitt 11b in eine zumindest im Wesentlichen axiale Erstreckungsrichtung umgebogen zu werden. Dabei nimmt der Radialabschnitt 11 c eine Abdichtung 19 fest auf. Der erste Radialabschnitt 11 a dient, ebenso wie die Abdichtung 19, zur axialen Begrenzung eines Dämpferraums 21, während der Axialabschnitt 11b als radial äußere Begrenzung des Dämpferraums 21 wirksam ist, und an seiner radialen Innenseite eine Führungsbahn 46 für Gleitelemente 25, 30a, 30b und 35 der Dämpfungseinrichtung 7 aufweist. Der Dämpferraum 21, der zur Aufnahme der Dämpfungseinrichtung 7 vorgesehen ist, kann mit viskosem Medium befüllt sein.

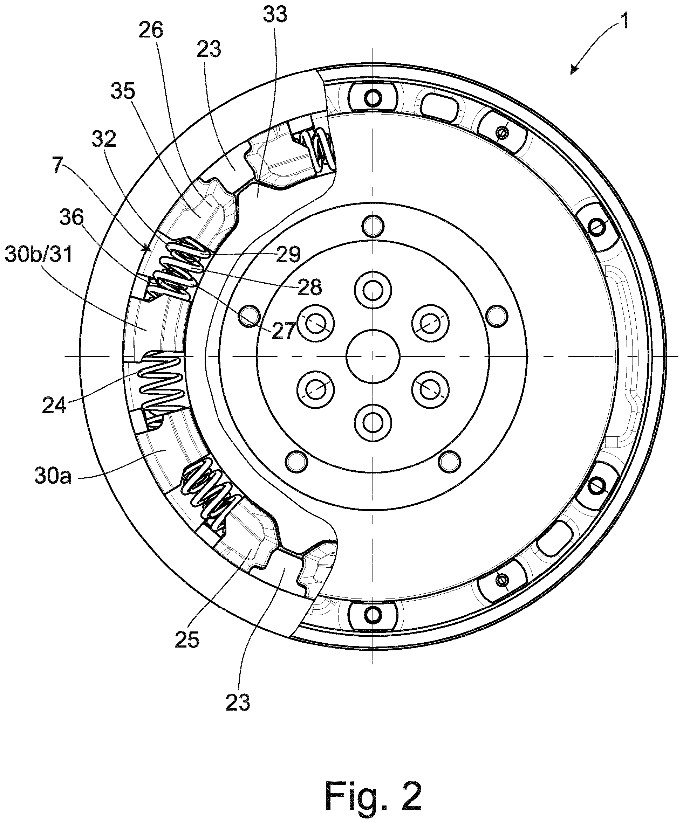

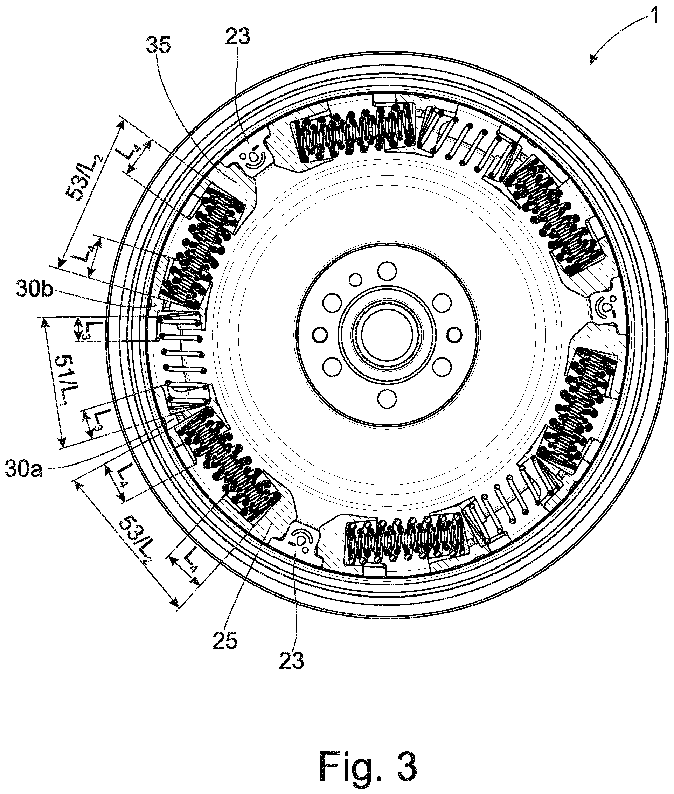

An der der Dämpfungseinrichtung 7 zugewandten Seite des ersten Radialabschnittes 11 a sowie an der radialen Innenseite der Führungsbahn 46, gegebenenfalls auch an der der Dämpfungseinrichtung 7 zugewandten Seite der Abdichtung 19, sind antriebsseitige Ansteuerelemente für die Dämpfungseinrichtung 7 vorgesehen. Die Fig. 2 zeigt mit der Bezugsziffer 23 derartige Ansteuerelemente. Diese wirken auf ein umfangsseitig erstes Gleitelement 35 ein, das als Federtopf 26 ausgebildet ist. Dieses Gleitelement 35 steht über einen ersten Energiespeicher 28, ausgebildet als Schraubenfeder 27 mit einer Mehrzahl von Windungen 29, in Wirkverbindung mit einem benachbarten, in Umfangsrichtung mittleren Gleitelement 30b, das als Federschuh 31 ausgebildet ist. Es folgen in Umfangsrichtung, hier gegen den Uhrzeigersinn betrachtet, weitere, jeweils als Federschuh 31 ausgeführte, in Umfangsrichtung mittlere Gleitelemente 30b und 30a" besser in Figur 3 zu sehen, die jeweils mittels eines wie zuvor beschrieben ausgebildeten Energiespeichers 28 mit dem nächstfolgenden, in Umfangsrichtung mittleren Gleitelement 30b, 30a in Wirkverbindung stehen, bevor schließlich das umfangsseitig letzte Gleitelement 25 folgt, das ebenso wie das umfangsseitig erste Gleitelement 35 als Federtopf 26 ausgebildet ist. Bevorzugt können die Energiespeicher 28 mit unterschiedlichen Steifigkeiten ausgebildet sein. Das umfangsseitig letzte Gleitelement 25 wirkt mit einem abtriebsseitigen Ansteuerelement 33 zusammen, das an einem Ring 34 angeformt ist. Durch keilförmige Ausbildung löst das abtriebsseitige Ansteuerelement 33 bei Wechselwirkung mit dem umfangsseitig letzten Gleitelement 25 eine Bewegung an demselben aus. Der das abtriebsseitige Ansteuerelement 33 aufnehmende Ring 34 ist an einer Schwungmasse 37 des abtriebsseitigen Übertragungselementes 9 befestigt, beispielsweise mittels Nieten 39.

Die zuvor behandelte Ansteuerungsreihenfolge der Gleitelemente 35, 30b, 30a und 25 ist in einer ersten Auslenkrichtung des antriebsseitigen Übertragungselementes 5 gegenüber dem abtriebsseitigen Übertragungselement 9 relevant, beispielsweise bei Zugbelastung. Bei umgekehrter Auslenkrichtung, also bei Schubbelastung, kehrt sich die Ansteuerungsreihenfolge um.

Die Ansteuerelemente 23 und 33 sind ebenso wie die Gleitelemente 35, 30b, 30a und 25 und die Energiespeicher 28 Teil der Dämpfungseinrichtung 7. Wie in Fig. 2 angedeutet und in Figur 3 besser zu sehen, sind auf dem Umfang des Torsionsschwingungsdämpfers drei solcher Dämpfungseinrichtungen 7 in Parallelschaltung zueinander angeordnet. Eine andere Anzahl von Dämpfungseinrichtungen 7 über den Umfang sind allerdings ebenso realisierbar.

Bevor im Einzelnen auf die Ausgestaltung und Funktion der Dämpfungseinrichtung 7 eingegangen wird, sei angemerkt, dass das abtriebsseitige Übertragungselement 9 an seiner Schwungmasse 37 im radial inneren Bereich über eine Sekundärnabe 38 (Fig. 1) verfügt, welche mittels einer Lagerung 40, gebildet durch ein kombiniertes Axial- und Radialgleitlager, auf der Primärnabe 13 des antriebsseitigen Übertragungselementes 5 zentriert und, in Richtung zur Kurbelwelle, axial positioniert ist. Unmittelbar radial außerhalb der Lagerung 40 weist die Schwungmasse 37 Durchlässe 42 auf, die zumindest für Montagewerkzeug einen Zugang zu den Befestigungselementen für die Anbindung des antriebsseitigen Übertragungselementes 5 an die Kurbelwelle verschaffen. Außerdem weist die Schwungmasse an ihrer von der Dämpfungseinrichtung 7 abgewandten Seite eine Anlagefläche 44 für einen Reibbelag einer nicht gezeigten Kupplungsscheibe auf, die Teil einer schaltbaren Reibungskupplung ist, so dass in Abhängigkeit vom Schaltzustand der Reibungskupplung von der Kurbelwelle eingeleitetes Drehmoment entweder auf eine abtriebsseitige Getriebeeingangswelle übertragen werden kann, oder aber diese Übertragung unterbrochen werden kann.

Wie in den Figuren 2 und 3 zu sehen, sind hier unterschiedliche Energiespeicher 28 in Form von Schraubenfedern 27 verbaut. Dies äußert sich an einer unterschiedlichen Kennlinie der Schraubenfedern, die beispielsweise durch eine unterschiedliche Wicklung oder auch Steigung, eine unterschiedliche Drahtstärke, ein unterschiedlicher Schraubenfederdurchmesser oder Schraubenfederlänge erzeugt werden kann. Um den Einbau von unterschiedlichen Schraubenfedern schon bei der Montage erkennbar zu machen. Hier ist beispielsweise zwischen dem ersten Gleitelement 35 und dem mittleren Gleitelement 30b eine Schraubenfeder 27 mit einer zusätzlichen Innenfeder 36 verbaut, wohingegen zwischen dem mittleren Gleitelement 30b und dem mittleren Gleitelement 30a nur eine Schraubenfeder 24 mit einer geringeren Drahtstärke als die Schraubenfeder 27 verbaut ist. Weiter ist auch eine unterschiedliche Länge L1 und L2 eines Energiespeicheraufnahmeraumes 51 und 53 für die Energiespeicher 24 und 27, 36 zu erkennen, sowie eine unterschiedliche Länge L3, L4 und L5 und L6 eines Abstützbereiches für die Energiespeicher 28, hier in Form als Schraubenfedern 24, 27 und 36. Dabei ist zu erwähnen, dass die mittleren Gleitelemente 30a und 30b mit zwei unterschiedlich langen Abstützbereichen 111, 112, und 113, 114 ausgeführt sind, wobei die kurze Abstützlänge L6 des mittleren Gleitelements 30a zu der kurzen Abstützlänge L 3 des mittleren Gleitelements 30b zeigt. Um bei der Montage der Dämpfungseinrichtung 7 eine Fehlbestückung bzw. einen Fehleinbau der Energiespeicher 28 zu den entsprechenden Gleitelementen 25, 30a, 30b, 35 zu verhindern, sind die Gleitelemente 25, 30a, 30b, 35 so ausgeführt, dass beispielsweise bei der Betrachtung des Gleitelments 35 zu 30b, ein jeweiliges Seitenflächende 105 und 104 eine jeweilige Konturierung 125 und 124 aufweist, die zueinander korrespondierend sind. Dies bedeutet, dass bei einem Annähern der Gleitelemente 35 und 30b, die Konturierung 125 des Seitenflächenendes 105 des ersten Gleitelements 35 sich in die korrespondierende Konturierung 124 des Seitenflächenendes 104 des mittleren Gleitelements 30b einfügt. Dabei ist hier die Konturierung 125 und 124 der beiden Gleitelemente 35 und 30b, die hier gestuft ausgeführt ist, einem jeweils langen Abstützbereich 115 des ersten Gleitelements 35 und einem langen Abstützbereich des mittleren Gleitelements 30b zugeordnet. Der kurze Abstützbereich 113 des mittleren Gleitelements 30b ist zu dem kurzen Abstützbereich 112 des mittleren Gleitelements 30a gerichtet. Dabei sind hier die dazugehörigen Konturierungen 123 und 122 der jeweiligen Seitenflächenenden 103 und 102 abgerundet ausgeführt. Bei der Montage der Energiespeichereinrichtung 7 ist somit erkennbar in welcher Reihenfolge die Gleitelemente 25, 30a, 30b und 35 verbaut werden müssen, um den entsprechenden Energiespeicher 28, hier die Schraubenfeder 24, 27, 36 zwischen die entsprechenden Gleitelemente 35, 30b, 30a, 25 einzusetzen.

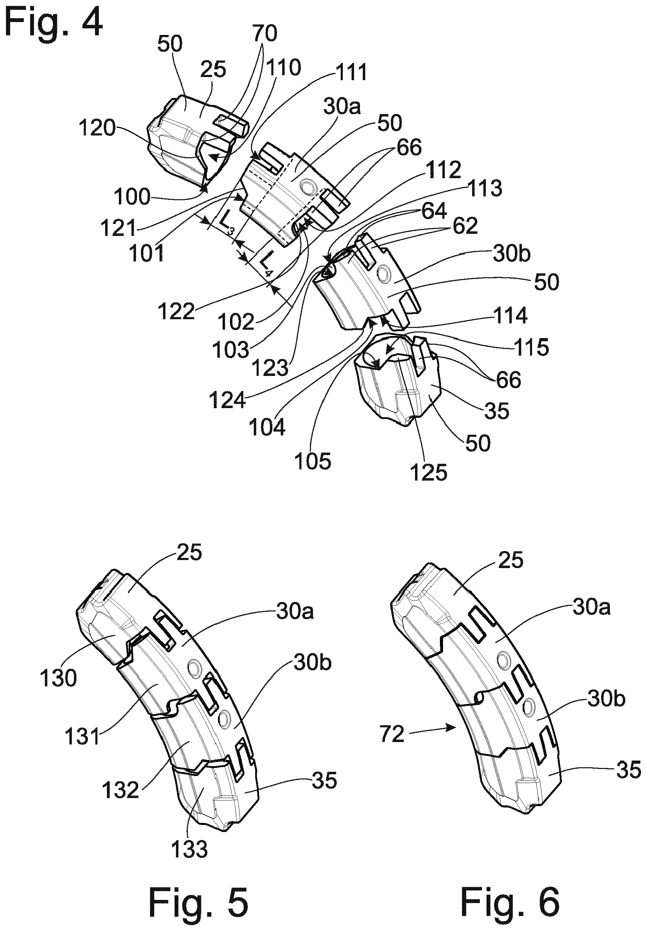

In den Figuren 4, 5 und 6 sind die Gleitelemente 25, 30a, 30b und 35 einer der drei zueinander parallel geschalteten Dämpfungseinrichtungen 7 herausgezeichnet, beispielsweise die Gleitelemente 25, 30a, 30b und 35 gemäß der zeichnerischen Darstellung in der Figur 2. Zugunsten einer vereinfachten Darstellung wurde auf die Einzeichnung der Energiespeicher 28 verzichtet. Die Gleitelemente 25, 30a, 30b und 35 nehmen in der Figur 4 eine Relativposition zueinander ein, die sich bei unbelasteten oder gering belasteten Energiespeichern einstellt, und bei der die einzelnen Gleitelemente 25, 30a, 30b und 35 in Umfangsrichtung voneinander beabstandet sind. In der Figur 4 ist eine Relativposition der Gleitelemente 25, 30a, 30b und 35 zueinander unter hoher Last gezeigt, während Fig. 5 die Gleitelemente 25, 30a, 30b und 35 bei Spitzenlast oder Überlast zeigt. Das mittlere Gleitelement 30b ist in einer vergrößerter Darstellung in der Figur 6 herausgezeichnet.

Die Gleitelemente 25, 30a, 30b und 35 weisen, wie Fig. 4 deutlich erkennen lässt, ein spezielles Design auf, das nachfolgend ausführlich erläutert ist.

Die Gleitflächen 50 der Gleitelemente 25, 30a, 30b und 35 münden an ihren den jeweils in Umfangsrichtung benachbarten Gleitelementen 25, 30a, 30b und 35 zugewandten Seiten in Umfangsfortsätze 62, die in Umfangsrichtung über die jeweilige Gleitfläche 50 hinausragen. Die Umfangsfortsätze 62 verjüngen sich axial mit Vorzug in Richtung zu ihren umfangsseitig freien Enden 64. Jedem dieser Umfangsfortsätze 62 ist am jeweils in Umfangsrichtung benachbarten Gleitelement 25, 30a, 30b und 35 je ein Eindringraum 66 zugeordnet, der sich, ausgehend von einem umfangsseitigen Eindringbereich 68, in Umfangsrichtung hin zu seinem umfangsseitigen Endbereich 70, der an die Gleitfläche 50 angrenzt, mit Vorzug axial verengt.

Wie die Figuren 4, 5 und 6 zeigen, dringen die Umfangsfortsätze 62 bei zunehmendem Einfederweg der sich zwischen den Gleitelementen 25, 30 und 35 befindlichen Energiespeicher 28 zunehmend in den jeweils zugeordneten Eindringraum 66 des jeweils in Umfangsrichtung benachbarten Gleitelementes 25, 30a, 30b und 35 ein, wobei die Figur 4 die Relativposition der Gleitelemente 25, 30a, 30b und 35 bei weitgehend gestauchten Energiespeichern 28 zeigt, während die Figur 5 die Gleitelemente 25, 30a, 30b und 35 bei so weit gestauchten Energiespeichern 28 zeigt, dass die Gleitelemente 25, 30a, 30b und 35 in Anlage aneinander gelangt sind, und somit keinen weiteren Einfederweg an den Energiespeichern 28 mehr zulassen, auch wenn die eingeleitete Last noch weiter ansteigen sollte. Die Gleitelemente 25, 30a, 30b und 35 bilden demnach eine Einfederweg-Begrenzung 72 für die Energiespeicher 28. Es ist hierbei unerheblich, ob die Einfederweg-Begrenzung 72 durch die Umfangsfortsätze 62 in Verbindung mit dem jeweils zugeordneten Eindringraum 66 gebildet werden, oder durch die Seitenflächenden 100, 101, 102, 103, 104, 105. Im erstgenannten Fall sind die Umfangsfortsätze 62 für eine Doppelfunktion vorgesehen, indem sie sowohl für eine radiale Abstützung von Windungen 29 der Energiespeicher 28 gegen fliehkraftbedingte Auslenkungen sorgen, als auch für eine Begrenzung des Einfederwegs der Energiespeicher 28, während im anderen Fall durch räumliche und bauteilmäßige Trennung eine Funktionstrennung erfolgt, wonach die Umfangsfortsätze 62 allein für die radiale Abstützung von Windungen 29 der Federspeicher 28 vorgesehen sind, während die Seitenflächenenden 100, 101, 102, 103, 104, 105 die Begrenzung des Einfederwegs der Energiespeicher 28 gewährleisten. Dabei ist es jedoch nicht zwingend, dass die Seitenflächenenden 100, 101, 102, 103, 104, 105 vollflächig gegeneinander anliegen, wie beispielsweise in der Figur 5 zwischen den Gleitelementen 25 und 30a, sowie 30b und 35 gezeigt. Es kann auch ein teilweise flächiges Anliegen der Seitenflächenenden 100, 101, 102, 103, 104, 105 vorliegen, wie es in der Figur 5 zwischen den Gleitelementen 30a und 30b dargestelt ist.

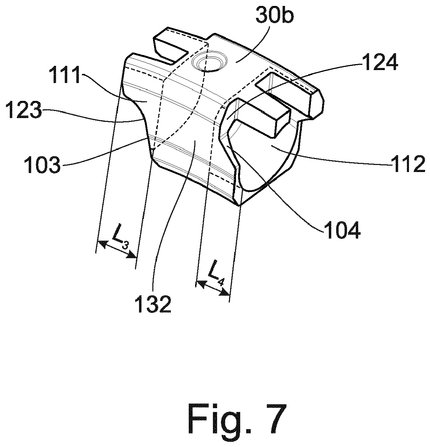

Die Figur 7 zeigt das mittlere Gleitelement 30b mit den beidseitigen unterschiedlichen Abstützbereichen 111 und 112, wobei der Abstützbereich 112 eine größere Länge L4 aufweist, als die Länge L3 des gegenüberliegenden Abstützbereichs 111 sowie die Seitenfläche 132 mit den beidseitig angeordneten Seitenflächenenden 103, 104 mit den dazugehörigen unterschiedlichen Konturierungen 123, 124, wobei die gestufte Konturierung 124 der größeren Länge L4 des Abstützbereiches 112 zugeordnet ist, wobei die gerundete Konturierung 123 der geringeren Länge L3 des Abstützbereiches 111 zugeordnet ist. Dabei ist die Art der Konturierung unerheblich. Entscheidend ist, dass den unterschiedlichen Abstützlängen L3, L4 auch eine unterschiedliche Konturierung 123, 124 zugeordnet ist und somit auch von außen bei der Montage ersichtlich ist.

### Bezugszeichen

- 1: Torsionsschwingungsdämpfer
- 2: Antriebsseite
- 3: Achse
- 5: antriebsseitiges Übertragungselement
- 6: Abtriebsseite
- 7: Dämpfungseinrichtung
- 9: abtriebsseitiges Übertragungselement
- 11: Primärflansch
- 11a: erster Radialabschnitt
- 11b: Axialabschnitt
- 11c: zweiter Radialabschnitt
- 13: Primärnabe
- 15: Durchgänge
- 17: Anlaufscheiben
- 19: Abdichtung
- 21: Dämpferraum
- 23: antriebsseitiges Ansteuerelement
- 24: Schraubenfeder
- 25: umfangsseitig letztes Gleitelement
- 26: Federtopf
- 27: Schraubenfeder
- 28: Energiespeicher
- 29: Windungen
- 30a: umfangsseitig mittleres Gleitelement
- 30b: umfangsseitig mittleres Gleitelement
- 31: Federschuh
- 32: Schraubenfeder
- 33: abtriebsseitiges Ansteuerelement
- 34: Ring
- 35: umfangsseitig letztes Gleitelement
- 37: Schwungmasse
- 38: Sekundärnabe
- 39: Nieten
- 40: Lagerung
- 42: Durchlässe
- 44: Anlagefläche
- 46: Führungsbahn
- 50: Gleitflächen
- 51: Energiespeicheraufnahmeraum
- 53: Energiespeicheraufnahmeraum
- 54: Umfangsansätze
- 62: Umfangsfortsatz
- 64: freie Enden
- 66: Eindringraum
- 68: Eindringbereich
- 70: umfangsseitiger Endbereich
- 72: Einfederweg-Begrenzung
- A: Drehachse
- L1: Länge Energiespeicheraufnahmeraum
- L2: Länge Energiespeicheraufnahmeraum
- L3: Länge Abstützbereich
- L4: Länge Abstützbereich

## Patentansprüche

1. Torsionsschwingungsdämpfer (1) mit einer um eine Drehachse A drehbaren Antriebsseite (2) mit einem antriebsseitigen Übertragungselement (5) und einem gleichachsig hierzu drehauslenkbaren abtriebsseitigen Übertragungselement (9) auf einer Abtriebsseite (6), das mit dem antriebsseitigen Übertragungselement (5) über eine mit Energiespeichern (28) versehene Dämpfungseinrichtung (7) verbunden ist, bei der sich die Energiespeicher (28) an Gleitelementen (25, 30a, 30b, 35) abstützen, die in einem der Übertragungselemente (5, 9) in Umfangsrichtung bewegbar angeordnet sind, und wobei die Gleitelemente (25, 30a, 30b, 35) zumindest eine zu der Antriebsseite (2) oder der Abtriebsseite (6) gerichteten Seitenfläche (130, 131, 132, 133) aufweisen mit einem zu einem Abstützbereich (110, 111, 112, 113, 114, 115) für die Energiespeicher (28) gerichteten Seitenflächenende (100, 101, 102, 103, 104, 105), wobei zumindest ein Seitenflächenende (100, 101, 102, 103, 104, 105) eine Konturierung (120, 121, 122, 123, 124, 125) aufweist, die zu einer korrespondierenden Konturierung (120, 121, 122, 123, 124, 125) des benachbarten Seitenflächenendes (100, 101, 102, 103, 104, 105) des benachbarte Gleitelements (25, 30a, 30b, 35) gerichtet ist,
**dadurch gekennzeichnet,**
**dass** die Gleitelemente (30a, 30b) mit beidseitigen Abstützbereichen (111, 112; 113, 114) für die Energiespeicher (28) jeweils unterschiedliche Konturierungen (121, 122; 123, 124) der beiden Seitenflächenenden (101, 102; 103, 104) aufweisen.

2. Torsionsschwingungsdämpfer (1) nach Anspruch 1, **dadurch gekennzeichnet, dass** sich die benachbarten Seitenflächenenden (100, 101, 102, 103, 104, 105) der Gleitelemente (25, 30a, 30b, 35) bei einer maximalen Annäherung vollständig oder nahezu vollständig zur gegenseitigen Anlage bringen.

3. Torsionsschwingungsdämpfer (1) nach Anspruch 1 oder 2, **dadurch gekennzeichnet, dass** die Seitenflächen (130,131,132,133) der Gleitelemente (25, 30a, 30b, 35) bei einer maximalen Annäherung eine vollständig geschlossene oder nahezu vollständig geschlossene Seitenfläche bilden.

4. Torsionsschwingungsdämpfer (1) nach einem der vorangehenden Ansprüche, **dadurch gekennzeichnet, dass** die benachbarte Gleitelemente (25, 30a, 30b, 35) an einer umfangmäßigen Gleitfläche (50) zueinander gerichtete Umfangsfortsätze (62) und/oder Eindringräume (66) aufweisen.

5. Torsionsschwingungsdämpfer (1) nach einem der vorangehenden Ansprüche, **dadurch gekennzeichnet, dass** der Energiespeicher (28) eine Schraubenfeder (24, 32) ist.

6. Torsionsschwingungsdämpfer (1) nach Anspruch 5, **dadurch gekennzeichnet, dass** die benachbarten Gleitelemente (25, 30a, 30b, 35) einen Energiespeicheraufnahmeraum (51, 53) bilden, wobei der Energiespeicheraufnahmeraum (51, 53) bei einer maximalen Annäherung der benachbarten Gleitelemente (25, 30a, 30b, 35) eine Länge (L1, L2) aufweist, die größer ist, als eine Blocklänge der darin aufgenommenen Schraubenfeder (24, 32).

7. Torsionsschwingungsdämpfer (1) nach einem der vorangehenden Ansprüche, **dadurch gekennzeichnet, dass** die Gleitelemente (30a, 30b) mit zwei Abstützbereichen (111, 112; 113, 114) für Energiespeicher (28) jeweils unterschiedliche Längen (L3, L4; L5, L6) für die Abstützbereiche (111,112; 113, 114) vorsehen.
